# EUROPEAN PATENT SPECIFICATION

(11) **EP 1 010 730 B1**
(45) Date of publication and mention of the grant of the patent: **02.03.2005**
(21) Application number: 98830765.8
(22) Date of filing: 17.12.1998
(51) Int. Cl.: C08L 97/02, C09D 197/02, C09D 201/00

(54) **Wood flour-based fluid composition for coating, insulating and/or filling and method of application**
Flüssige Zusammensetzung auf der Basis von Holzmehl zum Beschichten, Isolieren und/oder Füllen und Verfahren zum Auftragen
Composition fluide à base de farine de bois pour le revêtement, l'isolation et/ou le remplissage et méthode d'application

(43) Date of publication of application: 21.06.2000
(73) Proprietor: Valenti, Impero, 47100 Forli' Fo (IT)
(72) Inventor: Valenti, Impero, 47100 Forli' Fo (IT)
(74) Representative: Lanzoni, Luciano

(56) References cited:
- WO-A-80/00256
- DD-A- 300 980
- DE-A- 3 222 416
- DE-A- 3 606 167
- DE-U- 29 604 493
- FR-A- 2 567 795
- CHEMICAL ABSTRACTS, vol. 89, no. 22, 27 November 1978 Columbus, Ohio, US; abstract no. 181436, "coating materials for wallpaper" XP002102203 & JP 53 077230 A (INSTITUTE PRODUCTION AND DEVELOPMENT SCIENCE) 8 July 1978

## Description

The present invention relates to a wood flour-based fluid composition, for coating, insulating and/or filling surfaces with low composition thickness and to a method for the application of the composition.

As is well known, whenever it is necessary to renovate surfaces of artefacts in general, in order to restore their functionality or aesthetic appearance, or to insulate the surface to be treated from the thermal, acoustic, electrical or even hygienic point of view, several different materials are used, depending on the case, whereof all however entail negative aspects, due in some cases to the intrinsic costs and/or the costs of the necessary labour, which are not always moderate, in other cases to the inevitable tendency of the material used to alter over time. For example, it is known that in the past the so-called, and well known, "Eternit" was used to form covers such as roofs and penthouses, thanks to its great resistance to wear and weather. However, ever since it was noted that this material is harmful to health, due to the glass micro-fibres its releases, it has become necessary to replace it or render it harmless. In the first case, rather significant problems exist with the disposal of this harmful material. If instead the material were to be rendered harmless, it would be possible to pour, over the roof, a new layer of concrete lightened with clay or polyurethane foam, and then lay a new tile roof. Obviously, this solution entails non negligible costs. Another, more economical, solution provides for coating the roof with particular resins, able to prevent the release of the aforesaid micro-fibres. In this latter case, however, it must be noted that, with thermal expansion, such resins crack, progressively losing their effectiveness, as they flake. Other surfaces that notoriously require maintenance are those made of wood, which are, in many cases, treated periodically with paints which, also in this case, can lose their homogeneity due to the strong thermal expansion of wood.

Also masonry surfaces to be retouched present the same disadvantages indicated above. The aim of the present invention is to make available an easily applied fluid composition, which eliminates all the aforesaid drawbacks.

The subject invention is a fluid composition, able to be painted, based on extremely fine wood particles (wood flour), which easily and economically allows the aforesaid applications. The high wood content allows to obtain an insulating and heat-deformable material, hence one that follows any thermal excursions without any problems, being also a mostly natural material.

Moreover the subject composition, although wood-based, is very advantageously fire retardant and thus not flammable.

The invention, being able to be applied by spraying, can be laid in very thin layers, depending on the envisioned use.

Such a composition can also easily be applied, after using bonding agents and with the subsequent treatment with fillers, of the kind commonly usable for wood and it is also waterproof and impervious to moulds, without being subject to colour changes or other alterations.

Lastly, such a composition can be realised with water percentages which can be varied depending on the final use whereto the composition is destined. The composition can be rather thick, in which case it can be used also as filler or spread with stopping knife means and the like, or also rather liquid, when it is used substantially as a common dense paint, with high thickness.

Further features and advantages of the invention shall become more readily apparent from the detailed description that follows.

The subject fluid composition essentially comprises the following components:
- wood flour;
- water;
- resin;
- inert materials;
- a solution of water soluble polymers of cellulose

In order to render the material non flammable, in spite of the abundant presence of wood, it preferably comprises also fire-retardant materials and solvent.

More specifically, the composition comprises:
- wood flour introduced in a percentage ranging between 15% and 17%;
- water introduced in a percentage ranging between 15% and 25%;
- resin introduced in a percentage ranging between 15% and 25%;
- inert materials introduced in a percentage ranging between 1% and 4%;
- solution of water soluble polymers of cellulose introduced in a percentage ranging between 28% and 33%;
- fire-retardant materials introduced in a percentage ranging between 3.5% and 6%;
- solvent introduced in a percentage ranging between 1% and 3%.

The wood flour used in the subject composition is in particular made with royal beech, with grain size ranging between 75 micron and 150 micron. Nevertheless, although wood flour in itself is not particularly costly, it could even more economically be waste flour, as long as it has the aforesaid grain size. The resin is chosen among thermoplastic materials, such as vinyl resin, to provide the composition with the best possible thermoplasticity, and it is stabilised. In particular it is a water dilutable vinyl-acrylic copolymer desiccating in air, with high chlorine content, stabilised in its molecule, to render the composition particularly suitable for the formulation of fire-retardant products, as in the case at hand.

The inert materials, useful for the optimal success of the composition, comprise for instance k aolin a nd a t least a natural mineral charge based on silica, carbonates, magnesium and manganese, obtainable from powder made with diatoms (particular shells). It is available on the market as CELITE 281. The latter component is particularly interesting, because it is rather spongy and thus easily absorbs liquid for a good success of the composition, but it also easily makes the liquid components volatilise during the desiccation process, after the application of the compositions.

An essential component is constituted by the cellulose solution, which is a solution of water-soluble polymers (cellulose ethers) and it is used to suspend, stabilise, thicken aqueous systems. It also allows the controlled release of water, very useful progressively to obtain an optimally amalgamated composition.

The fire-retardant materials are chosen among phosphorus salts-based compounds. In particular, in the subject example, they comprise tris-monochloro-isopropyl-phosphate, liquid chlorinated phosphate ester and ammonium polyphosphate.

The solvent used is conveniently coalescent like the methyl and propyl ether of propylene glycol, to favour film formation in emulsified resins, such as the methyl and propyl ether of propylene glycol.

With respect to the greater or lesser density of the composition, depending on the use whereto it can be destined, a further and subsequent addition of water is envisioned.

A practical example of embodiment of the subject composition comprises the following exact formulation, obtained after long studies and trials:
- solution of water soluble polymers of cellulose at about 29.7%;
- coalescent solvent (PM/DPM) at about 2%;
- fluid fire-retardant material - the phosphate - (AMGARD TMPC) at about 1.5%;
- water at about 20%;
- stabilised resin at about 20%;
- wood flour at about 16.3%;
- fire-retardant material in powder form - ammonium polyphosphate - at about 2.9%;
- kaolin at about 2%;
- CELITE 281 at about 0.5%.

To the aforementioned components, subjected to mixing, is added water as necessary (in the case at hand, about 5.15%) mixing for about fifteen minutes at ambient temperature of about 20 degrees.

The product thus obtained is preferably sprayed (although it could be applied with stopping knife means or spread like filler), with appropriate pumps which collect the composition and compress it under adequate pressure and convey it along hoses with nozzle terminals, for constant flow rate spraying. Such pumps are of the kind produced by TAIVER of Milan (Italy).

On the surface to be treated, acrylic or polyurethane adhesive, preferably also fire-retardant, is applied beforehand, for a quantity of about 70/120 grams per square metre.

In the case at hand the choice of adhesive with the aforesaid required characteristics has fallen, in particular, on the acrylic adhesive made by Germany's HENKEL, or on the polyurethane adhesive made by CONCORD ofTreviso (Italy).

Once the liquid part of the layer, or of each layer (with thickness measuring about 0.5 mm and in any case no more than 1 mm) has evaporated, it is convenient to apply filler or insulating material, preferably fire-retardant, of the type normally usable for wood. In the case at hand, the one specifically chosen is made by ICA of Civitanova Marche (Italy).

The subject invention may be subject to modifications or improvements, without thereby departing from the scope of the aforementioned claims.

## Claims

1. Fluid composition based on wood flour, for coating, insulating and/or filling surfaces with low composition thickness, **characterised in that** it comprises at least the following components: wood flour; water; resin; inert materials; a solution of water soluble polymers of cellulose.

2. Composition according to claim 1, **characterised in that** it comprises at least the following additional components: fire-retardant materials; solvent.

3. Composition according to claim 2, **characterised in that**:
- the wood flour is introduced in a percentage ranging between 15% and 17%;
- the water is introduced in a percentage ranging between 15% and 25%;
- the resin is introduced in a percentage ranging between 15% and 25%;
- the inert materials are introduced in a percentage ranging between 1 % and 4%;
- the solution of water soluble polymers of cellulose is introduced in a percentage ranging between 28% and 33%;
- the fire-retardant materials are introduced in a percentage ranging between 3.5% and 6%;
- the solvent is introduced in a percentage ranging between 1% and 3%.

4. Composition according to one of the previous claims, **characterised in that** the resin is a vinyl resin.

5. Composition according to claim 4, **characterised in that** the stabilised vinyl resin is a water dilutable vinyl-acrylic copolymer desiccating in air, with high chlorine content, stabilised in its molecule.

6. Composition according to any one of the previous claims, **characterised in that** the inert materials comprise at least kaolin and at least a natural mineral charge based on silica, carbonates, magnesium and manganese, obtainable from diatom powder.

7. Composition according to claim 1, **characterised in that** the polymers solution comprises cellulose ethers.

8. Composition according to any one of the previous claims, **characterised in that** the fire-retardant materials are chosen among phosphor salts-based compounds.

9. Composition according to claim 8, **characterised in that** the fire-retardant materials comprise at least:
- tris-monochloro-isopropyl-phosphate, liquid chlorinated ester phosphate;
- ammonium polyphosphate.

10. Composition according to any of the previous claims, **characterised in that** the solvent is coalescent like the methyl and propyl ether of propylene glycol.

11. Composition according to any one of the previous claims **characterised in that** the wood flour has grain size ranging between 75 and 150 micron.

12. Composition according to any one of the previous claims, **characterised in that** it comprises a further addition of water, depending on the use whereto the composition is destined.

13. Method for the application of the composition, **characterised in that** it comprises the following phases:
- preliminary application, on the surface to be treated, of acrylic or polyurethane adhesive;
- successive application of the composition;
- application of an external filler or insulating agent, after desiccation of the composition.

14. Method according to claim 13, **characterised in that** the adhesive is of the acrylic type and it is applied in a quantity ranging between 70 and 120 gr/m2.

15. Method according to claim 13, **characterised in that** the adhesive is of the polyurethane type and it is applied in a quantity ranging between 70 and 120 gr/m2.

16. Method according to claim 14, **characterised in that** the acrylic adhesive is fire-retardant.

17. Method according to claim 15, **characterised in that** the filler or insulating agent is fire-retardant.

18. Method according to claim 13, **characterised in that** the application of the composition is effected by spraying, by means of a suitable pump, in one or more layers, each with a maximum thickness of about 1 mm.

## Patentansprüche

1. Flüssige Zusammensetzung auf der Basis von Holzmehl zum Beschichten, Isolieren und/oder Füllen von Oberflächen mit geringer Dicke der Zusammensetzung, **dadurch gekennzeichnet, dass** sie wenigstens die folgenden Komponenten enthält: Holzmehl; Wasser; Harz; träge Materialien; eine Lösung aus wasserlöslichen Zellulosepolymeren.

2. Zusammensetzung nach Patentanspruch 1, **dadurch gekennzeichnet, dass** sie wenigstens die folgenden zusätzlichen Komponenten enthält: flammwidrige Materialien; Lösungsmittel.

3. Zusammensetzung nach Patentanspruch 2, **dadurch gekennzeichnet, dass**:
- das Holzmehl mit einem Anteil zwischen 15% und 17% beigegeben ist;
- das Wasser mit einem Anteil zwischen 15% und 25% beigegeben ist;
- das Harz mit einem Anteil zwischen 15% und 25% beigegeben ist;
- die trägen Materialien mit einem Anteil zwischen 1% und 4% beigegeben sind;
- die Lösung aus wasserlöslichen Zellulosepolymeren mit einem Anteil zwischen 28% und 33% beigegeben ist;
- die flammwidrigen Materialien mit einem Anteil zwischen 3,5% und 6% beigegeben sind;
- das Lösungsmittel mit einem Anteil zwischen 1% und 3% beigegeben ist.

4. Zusammensetzung nach einem der vorstehenden Patentansprüche, **dadurch gekennzeichnet, dass** das Harz ein Vinylharz ist.

5. Zusammensetzung nach Patentanspruch 4, **dadurch gekennzeichnet, dass** das Vinylharz ein mit Wasser zu verdünnendes, an der Luft trocknendes Vinyl-Acryl-Kopolymer mit einem hohen Chlorgehalt ist, stabilisiert in seinem Molekül.

6. Zusammensetzung nach einem beliebigen der vorstehenden Patentansprüche, **dadurch gekennzeichnet, dass** die trägen Materialien wenigstens Porzellanerde und wenigstens einen natürlichen Mineralfüllstoff enthalten, b asierend auf Silicium, Karbonaten, Magnesium und Mangan, erhältlich aus Diatomeenpulver.

7. Zusammensetzung nach Patentanspruch 1, **dadurch gekennzeichnet, dass** die Polymerlösung Zelluloseäther enthält.

8. Zusammensetzung nach einem beliebigen der vorstehenden Patentansprüche, **dadurch gekennzeichnet, dass** die flammwidrigen Materialien aus Compounds auf der Basis von Phosphorsalzen ausgewählt sind.

9. Zusammensetzung nach Patentanspruch 8, **dadurch gekennzeichnet, dass** die flammwidrigen Materialien wenigstens enthalten:
- Tris-Monochlor-Isopropylphosphat, flüssiges, chloriertes Esterphosphat;
- Ammonium-Polyphosphat.

10. Zusammensetzung nach einem beliebigen der vorstehenden Patentansprüche, **dadurch gekennzeichnet, dass** das Lösungsmittel verbunden ist wie Methyl- und Propyläther aus Propylenglykol.

11. Zusammensetzung nach einem beliebigen der vorstehenden Patentansprüche, **dadurch gekennzeichnet, dass** das Holzmehl eine Körnung hat, die zwischen 75 und 150 µ beträgt.

12. Zusammensetzung nach einem beliebigen der vorstehenden Patentansprüche, **dadurch gekennzeichnet, dass** sie eine weitere Zugabe von Wasser enthält, abhängig von dem Verwendungszweck, für welchen die Zusammensetzung bestimmt ist.

13. Verfahren zum Auftragen der Zusammensetzung, **dadurch gekennzeichnet, dass** es die folgenden Phasen enthält:
- vorbereitendes Auftragen auf die zu behandelnde Oberfläche von Acryl- oder Polyurethanklebstoff;
- anschliessendes Auftragen der Zusammensetzung;
- Auftragen eines äusseren Füll- oder Isoliermittels nach dem Trocknen der Zusammensetzung.

14. Verfahren nach Patentanspruch 13, **dadurch gekennzeichnet, dass** der Klebstoff von einem Acryltyp ist und in einer Menge zwischen 70 und 120 g/m² aufgetragen wird.

15. Verfahren nach Patentanspruch 13, **dadurch gekennzeichnet, dass** der Klebstoff von einem Polyurethantyp ist und in einer Menge zwischen 70 und 120 g/m² aufgetragen wird.

16. Verfahren nach Patentanspruch 14, **dadurch gekennzeichnet, dass** der Acrylklebstoff flammwidrig ist.

17. Verfahren nach Patentanspruch 15, **dadurch gekennzeichnet, dass** das Füll- oder Isoliermittel flammwidrig ist.

18. Verfahren nach Patentanspruch 13, **dadurch gekennzeichnet, dass** das Auftragen der Zusammensetzung durch Sprühen mit Hilfe einer geeigneten Pumpe erfolgt, und zwar in einer oder mehreren Schichten, jede mit einer maximalen Dicke um 1 mm.

## Revendications

1. Composition fluide à base de farine de bois, pour le revêtement, l'isolation et/ou le remplissage de surfaces avec une basse épaisseur de composition, **caractérisée en ce qu'**elle comprend au moins les composants suivants: farine de bois, résine, matériaux inertes, une solution de polymères de cellulose solubles dans l'eau.

2. Composition selon la revendication 1, **caractérisée en ce qu'**elle comprend au moins les composants additionnels suivants: matériaux ignifuges, solvants.

3. Composition selon la revendication 2, **caractérisée en ce que**:
- la farine de bois est introduite dans un pourcentage variant de 15% à 17%;
- l'eau est introduite dans un pourcentage variant de 15% à 25%;
- la résine est introduite dans un pourcentage variant de 15% à 25%;
- les matériaux sont introduits dans un pourcentage variant de 1% à 4%;
- la solution de polymères de cellulose soluble dans l'eau est introduite dans un pourcentage variant de 28% à 33%;
- les matériaux ignifuges sont introduits dans un pourcentage variant de 3,5% à 6%;
- le solvant est introduit dans un pourcentage variant de 1% à 3%.

4. Composition selon l'une des revendications précédentes, **caractérisée en ce que** la résine est une résine vinylique.

5. Composition selon la revendication 4, **caractérisée en ce que** la résine vinylique est un copolymère vinyl-acrylique pouvant être dilué dans l'eau séchant à l'air, à haut contenu de chlore, stabilisé dans sa molécule.

6. Composition selon n'importe laquelle des revendications précédentes, **caractérisée en ce que** les matériaux inertes comprennent au moins du kaolin et au moins une charge minérale naturelle à base de silice, carbonates, magnésium et manganèse, pouvant être obtenus à partir de poudre de diatomée.

7. Composition selon la revendication 1, **caractérisée en ce que** la solution de polymères comprend des éthers de cellulose.

8. Composition selon n'importe laquelle des revendications précédentes, **caractérisée en ce que** les matériaux ignifuges sont choisis parmi les composés à base de sels de phosphore.

9. Composition selon la revendication 8, **caractérisée en ce que** les matériaux ignifuges comprennent au moins:
- du trimonochloroisopropylphosphate, phosphate d'ester chloré liquide;
- du polyphosphate d'ammonium.

10. Composition selon n'importe laquelle des revendications précédentes, **caractérisée en ce que** le solvant est coalescent comme l'éther méthylique et propylique du glycol propylènique.

11. Composition selon n'importe laquelle des revendications précédentes, **caractérisée en ce que** la farine de bois présente une granulométrie variant de 75 à 150 microns.

12. Composition selon n'importe laquelle des revendications précédentes, **caractérisée en ce qu'**elle comprend une ultérieure addition d'eau, dépendant de l'utilisation à laquelle la composition est destinée.

13. Méthode pour l'application de la composition, **caractérisée en ce qu'**elle comprend les phases suivantes:
- application préliminaire, sur la surface à traiter, d'adhésif acrylique ou de polyuréthanne;
- successive application de la composition;
- application d'un agent de remplissage ou d'isolation externe, après dessiccation de la composition.

14. Méthode selon la revendication 13, **caractérisée en ce que** l'adhésif est de type acrylique et est appliqué dans une quantité variant de 70 à 120 g/m².

15. Méthode selon la revendication 13, **caractérisée en ce que** l'adhésif est de type polyuréthanne et est appliqué dans une quantité variant de 70 à 120 g/m².

16. Méthode selon la revendication 14, **caractérisée en ce que** l'adhésif acrylique est ignifuge.

17. Méthode selon la revendication 15, **caractérisée en ce que** l'agent remplissant ou isolant est ignifuge.

18. Méthode selon la revendication 13, **caractérisée en ce que** l'application de la composition est effectuée par pulvérisation, au moyen d'une pompe adéquate, en une ou plusieurs couches, chacune d'entre elles avec une épaisseur maximum d'environ 1 mm.
